# EUROPÄISCHE PATENTANMELDUNG

(11) **EP 1 064 836 A2**
(43) Veröffentlichungstag der Anmeldung: **03.01.2001**
(21) Anmeldenummer: 00113613.4
(22) Anmeldetag: 28.06.2000
(51) Int. Cl.: A01D 45/00

(54) **Vorrichtung zum Ernten von Pilzen, Transportvorrichtung sowie Behältnis zur Aufnahme von Pilzen**

(30) Priorität: 29.06.1999 DE 29910876 U
(71) Anmelder: Wiesenhof-Pilzland Vertriebsgesellschaft mbH, 49429 Visbek-Rechterfeld (DE)
(72) Erfinder: Wesjohann, Erich, 49429 Rechterfeld (DE)
(74) Vertreter: Eisenführ, Speiser & Partner

(57) **Zusammenfassung**

Die Erfindung betrifft eine Transportvorrichtung für Pilze mit einem Rahmengestell (44) und mehreren jeweils paarweise gegenüberliegenden, an dem Rahmengestell (44) montierten Tragschienen (46), auf die Behältnisse (48, 50) zur Aufnahme der Pilze auflegbar sind.

## Beschreibung

Die Erfindung bezieht sich ferner auf eine Transportvorrichtung für Pilze oder dgl. sowie ein Behältnis zur Aufnahme von Pilzen oder dgl.

Die vorliegende Erfindung betrifft eine Vorrichtung (Gondel) zum Ernten von Pilzen oder dgl., die in mehreren übereinander angeordneten Ebenen auf Stellagen untergebracht sind und manuell von den Stellagen entnommen werden können, mit einem relativ zu den Stellagen horizontal verfahrbaren Rahmengestell und einer an dem Rahmengestell befestigten Hubvorrichtung, die ein vertikal auf- und abbewegbares Traggestell zur Aufnahme einer die Pilze erntenden Person und/oder zur Aufnahme von Pilzen aufweist.

In bekannter Weise werden Pilze, beispielsweise Champignons, in klimatisierten und abgedunkelten Räumen gezüchtet. Die Pilze sind dabei in mehreren Ebenen übereinander auf den Stellagen entweder in Pitzbeeten oder in Kisten angeordnet und wachsen auf einem Substrat- oder Kompostmaterial. Die Pilze werden in regelmäßigen Abständen, nachdem sie eine bestimmte Größe erreicht haben, manuell abgeerntet.

In sogenannten Kistenbetrieben wachsen die Pilze in den klimatisierten Räumen auf übereinander stapelbaren Kisten. Zum Abernten werden die Kisten mit den Pilzen aus den klimatisierten Räumen komplett entnommen und an einen zentralen Ort transportiert. Dort werden die Kisten abgestellt, und die Pilze werden manuell abgepflückt. Ein Nachteil bei dieser Vorgehensweise in Kistenbetrieben besteht in Hygienehinsicht darin, daß möglicherweise auf den Pilzen oder dem Substrat vorhandene Krankheitserreger durch den Transport der Kisten innerhalb des Betriebs weiter verbreitet werden können, so daß sich derartige Erreger innerhalb des Betriebs verteilen.

In sogenannten Stellagenbetrieben sind die Pilze in mehreren Ebenen übereinander auf einem fest montierten Gestell angeordnet. Mit Hilfe einer eingangs beschriebenen Gondel wird jeder einzelne Pilz dabei in dem klimatisierten Raum von einer auf der Gondel stehenden Pflückerin (bzw. einem Pflücker) "gepflückt"; dabei wird mit einer Hand gepflückt. Eine solche Gondel ist an einer Seite einer Stellage in eine Schiene eingehängt und mit Hilfe von an dem Rahmengestell befestigten Laufrollen horizontal verfahrbar.

Mit Hilfe der Hubvorrichtung kann das Traggestell manuell auf und ab gefahren werden. Die Hubvorrichtung weist ein auf eine Trommel gewickeltes Zugseil auf. Die Trommel kann mit Hilfe einer Kurbel manuell rotiert werden, so daß das Traggestell auf und ab bewegbar ist. Aufgrund der Auf- und Abbewegbarkeit des Traggestells kann die Pflückerin die verschiedenen auf unterschiedlichen Ebenen angeordneten Pilze erreichen und die Pilze abpflücken. Durch die zusätzliche horizontale Verfahrbarkeit der Gondel läßt sich eine gesamte Stellage abernten. Die gepflückten Pilze werden in ein auf der Gondel abgestelltes oder eingehängtes Behältnis gelegt. Sobald dieses gefüllt ist, wird es aus dem klimatisierten Raum herausgebracht. Die Pilze werden anschließend gekühlt, dann weiterverarbeitet und verpackt.

Die manuelle Betätigung der Hubvorrichtung der bekannten Gondel erfordert eine verhältnismäßig große Kraft und kann zu Ermüdungen der Pflückerin führen. Die Behältnisse zur Aufnahme der Pilze weisen eine verhältnismäßig geringe Aufnahmekapazität auf, so daß sie häufig in zeitaufwendiger bzw. personalaufwendiger Weise ausgewechselt werden müssen. Darüberhinaus können die im ungekühlten Zustand in das Behältnis abgelegten Pilze Druckstellen bekommen.

Ein weiterer Nachteil besteht darin, daß eine Pflückerin mit nur einer Hand die Pilze abpflückt und anschließend mit der anderen Hand den Stengel des Pilzes abschneidet, woraus insgesamt eine relativ geringe Pflückleistung resultiert, das heißt, daß nur eine geringe Menge von Pilzen in einem bestimmten Zeitabschnitt geerntet werden kann.

Aufgabe der vorliegenden Erfindung ist es, eine verbesserte Vorrichtung zur Ernte von Pilzen (Gondel), eine verbesserte Transportvorrichtung und ein verbessertes Behältnis zum Ernten von Pilzen bereitzustellen. Insbesondere soll die Pflückleistung und die Pilzqualität mit Hilfe geeigneter Vorrichtungen erhöht werden und die Hygiene in den Pilzbetrieben deutlich erhöht werden.

Eine erfindungsgemäße Transportvorrichtung (Pflückwagen) für Pilze zeichnet sich aus durch ein Rahmengestell und mehrere jeweils paarweise gegenüberliegende an dem Rahmengestell montierte Tragschienen, auf die Behältnisse zur Aufnahme der Pilze auflegbar sind. Eine solche Transportvorrichtung wird bevorzugt zusammen mit einer zuvor beschriebenen erfindungsgemäßen Vorrichtung zum Ernten (Gondel) eingesetzt. Die Pflückerin kann während der Ernte die Pilze in die Behältnisse einlegen, die auf die Transportvorrichtung aufgelegt sind. Während des Pflückens, kann die Transportvorrichtung mit Hilfe der erfindungsgemäßen Gondel optimal relativ zu der Pflückerin ausgerichtet werden. Die Behältnisse können auf einfache Weise auf die Tragschienen aufgelegt und entlang der Tragschienen verschoben werden.

Ein weiterer Vorteil der Verwendung einer erfindungsgemäßen Transportvorrichtung für Pilze zusammen mit einer erfindungsgemäßen Gondel besteht darin, daß eine Pflückerin mit beiden Händen Pilze pflücken kann und die gepflückten Pilze unmittelbar im klimatisierten Pilzraum anschließend auf der Transportvorrichtung ablegt; insbesondere werden die abgepflückten Pilze auf Behältnissen in Form von im wesentlichen ebenen Lochblechen, die unten näher erläutert sind, abgelegt. Die Pflückleistung läßt sich erfindungsgemäß dadurch, daß beide Hände einer Pflückerin zum Ernten der Pilze zur Verfügung steht, erheblich erhöhen. Ist eine Transportvorrichtung ausreichend mit Pilzen gefüllt, wird sie mit Hilfe geeigneter Transportmittel, etwa einem Gabelstapler aus dem Pilzraum transportiert und unmittelbar dran anschließend in einen Kühlraum zum weiteren Herunterkühlen der Pilze gebracht. Erst im Anschluß an die weitere Kühlung der Pilze werden die Stengel der gekühlten Pilze abgeschnitten. Dies hat zur Folge, daß aufgrund des Schnitts keine oder nur eine geringfügige Beeinträchtigung des Pilzes, etwa eine Verfärbung im Bereich der Schnittfläche stattfindet. Darüberhinaus ermöglichen die erfindungsgemäßen Vorrichtungen eine Verbesserung der Pilzqualität und verringern deutlich die Gefahr, daß Erreger aus den Pilzbeeten innerhalb des Betriebs verteilt werden, wie dies in den bekannten sogenannten Kistenbetrieben häufig der Fall ist.

Eine bevorzugte Ausführungsform der Transportvorrichtung zeichnet sich dadurch aus, daß an dem Rahmengestell Befestigungsmittel vorgesehen sind, mitderen Hilfe ein Behältnis in einer gegenüber einer horizontalen Ebene geneigten Ebene befestigar ist. Durch diese geneigte Anordnung eines Behältnisses, bei dem es sich in besonders bevorzugter Weise um ein ebenes Blech oder ein Kunststofftablett handelt, kann es auf besonders einfache Weise manuell von der Pflückerin mit Pilzen befüllt werden, so daß insgesamt die Pflückleistung gesteigert wird. Das Behältnis ist dabei zur Pflückerin hin so geneigt, daß der weiter beabstandete Abschnitt des Behältnisses höher liegt als der der Pflückerin näherliegende Abschnitt.

In konstruktiv besonders einfacher Weise weisen die Befestigungsmittel zur geneigten Anordnung der Behältnisse jeweils zwei paarweise gegenüberliegende, an dem Rahmengestell abstehende Vorsprünge auf. Zweckmäßigerweise sind die Behältnisse im wesentlichen ebene, Durchgangsbohrungen aufweisende Bleche. Die Vorsprünge sind etwa als Schrauben oder Bolzen ausgebildet, wobei an einer Seite des Rahmengestells angeordnete Schrauben oder Bolzen versetzt und in unterschiedlichen Höhen relativ zueinander angeordnet sind. Dabei liegen zweckmäßiger Weise die Bleche in der geneigten Anordnung mit einer Unterseite auf einem Vorsprung auf und werden von dem anderen Vorsprung in der geneigten Anordnung durch Kontakt mit einer Oberseite des Blechs gehalten. Die mit beiden Händen erntende Pflückerin kann die Pilze schnell und ergonomisch auf dem schräggestellten Behältnis ablegen.

Die Transportvorrichtung wird gemäß einer Weiterbildung der Erfindung mit mehreren im unteren Bereich des Rahmengestells befestigten Laufrollen zu einem einfach verschiebbaren Transportwagen oder Pilzwagen, der einfach verfahrbar ist.

Gemäß eines weiteren Aspektes der Erfindung wird ein Behältnis zur Aufnahme von Pilzen oder dergleichen vorgeschlagen, welches mehrere Durchgangsbohrungen aufweist, wobei die Durchgangsbohrungen unterschiedliche Größen aufweisen. Auf diese Weise können Pilze unterschiedlicher Größen an dem Behältnis angeordnet werden, was für die Effizienz der Pilzernte von großer Bedeutung ist, da immer Pilze unterschiedlicher Größen (fein, mittel, riesig) heranwachsen und nun von einer Pflückerin gewissermaßen "gleichzeitig" geerntet und auf einem Behältnis plaziert werden können. Durch Einsatz eines derartigen Behältnisses wird die Pflückleistung weiter gesteigert.

In besonders bevorzugter Weise ist das Behältnis als flaches Blech oder flaches Tragelement ausgebildet. Die Pilzköpfe liegen dabei auf einer Oberfläche des Bleches auf, während die Stengel durch die Durchgangsbohrungen hindurchragen. Dadurch, daß die Durchgangsbohrungen erfindungsgemäß unterschiedliche Größen aufweisen, kann die Menge der auf dem Blech angeordneten Pilze deutlich erhöht werden, und es können unterschiedlich große Pilze gleichzeitig in das Behältnis gepflückt werden. Sie werden dann einfach der jeweils passenden Durchgangsbohrung zugeordnet. Vorzugsweise sind die Durchgangsbohrungen im wesentlichen kreisförmig und weisen unterschiedliche Durchmesser auf.

Ebenfalls bevorzugt ist es, daß die Durchgangsbohrungen beabstandet zueinander in mehreren Reihen angeordnet sind. Diese Ausführungsform wird dadurch weitergebildet, daß Durchgangsbohrungen mit geringerem Durchmesser jeweils zwischen Reihen von Durchgangsbohrungen größeren Durchmessers angeordnet sind.

Die Erfindung löst die Aufgabe ferner bei einer Vorrichtung zum Ernten der eingangs genannten Art dadurch, daß die Hubvorrichtung eine motorische oder hydraulische Antriebseinrichtung zum automatischen Auf- und Abbewegen des Traggestells aufweist.

Die erfindungsgemäße Vorrichtung zum Ernten von Pilzen oder dgl.(auch als Gondel bezeichnet) weist insbesondere den Vorteil auf, daß das Traggestell, auf dem eine Pflückerin steht, automatisch und stufenlos auf und ab bewegt wird und nicht mehr manuell mit Hilfe einer Handkurbel. Die Pflückerin kann durch einfaches An- und Ausschalten der Antriebseinrichtung sich selbst in eine optimale Position relativ zu den zu erntenden Pilzen verfahren, ohne daß sie hierfür Kraft aufwenden müßte. Folglich werden Kräfte geschont und die Pflückerin kann sich ganz auf die Pilzernte konzentrieren, so daß insgesamt die Pflückleistung, das heißt die Menge der in einer bestimmten Zeit geernteten Pilze deutlich verbessert wird. Die Antriebseinrichtung kann beispielsweise ein Elektromotor aber auch ein hydraulischer oder gegebenenfalls pneumatischer Antrieb sein.

Eine besonders bevorzugte Ausführungsform der Erfindung zeichnet sich aus durch eine weitere an dem Rahmengestell befestigte, eine motorische oder hydraulische Antriebseinrichtung aufweisende Hubvorrichtung zum Aufnehmen und automatischen Auf- und Abbewegen einer Transportvorrichtung für Pilze. Mit Hilfe dieser zweiten Hubvorrichtung kann eine Transportvorrichtung für Pilze auf ebenso einfache und kraftschonende Weise vertikal auf und ab gefahren werden. Auch diese weitere Hubvorrichtung erlaubt eine stufenlose Verfahrbarkeit der Transportvorrichtung in der Höhe, so daß einerseits sämtliche übereinander angeordnete Stellagen erreichbar sind und insbesondere eine Pflückerin die Transportvorrichtung relativ zu sich selbst optimal in der Höhe ausrichten kann, so daß die Erntearbeit in einer optimalen und individuell an die jeweilige Pflückerin anpaßbare Position ausgeführt werden kann. Auch hierdurch wird die Pflückleistung erhöht.

Durch eine Verwendung einer erfindungsgemäßen Gondel mit einer Transportvorrichtung kann eine Pflückerin mit beiden Händen im gekühlten Pilz- oder Pflückraum die Pilze ernten und unmittelbar daran anschließend auf der Transportvorrichtung ablegen, ohne in zeitaufwendiger Weise manuell den Stengel abschneiden zu müssen. Die Pflückerin kann sich aufgrund der erfindungsgemäßen Vorrichtungen voll auf das Abpflücken der Pilze konzentrieren, so daß die Pflückleistung gesteigert wird. Darüberhinaus wird die Hygiene in dem Betrieb gegenüber sogenannten Kistenbetrieben deutlich erhöht, da die Pilze nicht zusammen mit dem Substrat in Kisten aus dem Kühlraum entnommen und durch den Betrieb transportiert werden müssen, wobei Erreger verbreitet werden können, sondern die Pilze als solche werden ohne Substrat auf den Behältnissen der Transportvorrichtung abgelegt und anschließend weiterverarbeitet. Darüberhinaus wird die Hygiene in dem Pflückraum dadurch erhöht, daß die Pilze ohne Abschneiden des Stengels rasch nach dem Abpflücken aus dem Pflückraum heraustransportiert werden. Nach dem Befüllen der Transportvorrichtung wird diese dann von der Gondel abgenommen und z.B. mit Hilfe eines Gabelstaplers aus dem Pilzraum herausgebracht, so daß die Pilze an einem zentralen Ort weiterverarbeitet werden können. Die erfindungsgemäßen Vorrichtungen ermöglichen somit eine hohe Pflückleistung bei gleichzeitiger guter Hygiene in dem Betrieb.

Gemäß einer Variante einer erfindungsgemäßen Gondel sind beide Hubvorrichtungen an einem gemeinsamen Rahmengestell angeordnet, so daß beide zusammen mit der Pflückerin und einer Transportvorrichtung für Pilze oder einem Behältnis für Pilze relativ zu den Stellagen horizontal und vertikal verfahrbar sind.

Bei einer alternativen Ausführungsform ist jede Hubvorrichtung an einem separaten Rahmengestell angeordnet und sind vorzugsweise die beiden Rahmengestelle mittels einer Kopplungseinrichtung lösbar aneinander befestigbar, so daß die beiden Rahmengestelle im gekoppelten Zustand gemeinsam verfahrbar und im entkoppelten Zustand individuell verfahrbar sind. Auf diese Weise kann sich die Person optimal relativ zu der Transportvorrichtung für Pilze ausrichten, insbesondere kann ein unten näher beschriebenes Behältnis bzw. ein Blech zur Aufnahme der Pilze von der Transportvorrichtung abstehen und teilweise zwischen den beiden separaten Rahmengestellen angeordnet werden, was die Ernte erleichtert.

In ebenfalls bevorzugter Weise ist vorgesehen, daß die erste und/oder weitere Hubvorrichtung einen Antriebsmotor, eine mit diesem gekoppelte Seiltrommel und ein auf die Seiltrommel gewickeltes Zugseil aufweist, welches das Traggestell trägt, so daß auf konstruktiv einfache Weise ein Hubmechanismus mit integriertem Getriebe ausgebildet ist, um relativ hohe Drehzahlen eines beispielsweise elektrischen Antriebsmotors zu reduzieren, um geringe Hubgeschwindigkeiten verwirklichen zu können.

Gemäß einer Weiterbildung ist vorgesehen, daß das Zugseil um eine erste, an dem Rahmengestell befestigte Umlenkrolle und mindestens eine an dem Traggestell befestigte weitere Umlenkrolle umgelenkt und mit einem von der Seiltrommel beabstandeten Endabschnitt an dem Rahmengestell befestigt ist. Um den Schwerpunkt der gesamten Gondel nach unten zu verlagern, ist es vorteilhaft, daß der Antriebsmotor und die Seiltrommel im unteren Bereich des Rahmengestells angeordnet sind.

Zur Erhöhung der Sicherheit und Zuverlässigkeit der erfindungsgemäßen Gondel ist vorgesehen, daß das Traggestell mittels an dem Rahmengestell ausgebildeten Linearführungen gleitend geführt ist.

Bei einer ebenfalls bevorzugten Ausführungsform wird vorgeschlagen, daß Laufrollen zum horizontalen Verfahren an dem Rahmengestell befestigt sind, die in an den Stellagen befestigten Laufschienen einhängbar sind. Zum horizontalen Verfahren wird die Pflückerin sich an den Stellagen mit den Händen abstützen und auf diese Weise die Gondel in Bewegung setzen bzw. abbremsen.

Eine Weiterbildung der erfindungsgemäßen Vorrichtung sieht vor, daß das Traggestell der weiteren Hubvorrichtung für die Transportvorrichtung für Pilze mindestens einen Tragarm zum Aufnehmen der Transportvorrichtung aufweist.

Eine besonders einfache Betätigung der Antriebseinrichtungen wird dadurch erreicht, daß die Antriebseinrichtung der ersten und weiteren Hubvorrichtung durch einen an dem Rahmengestell befestigten Schalter ein- bzw. ausschaltbar ist.

Die Erfindung ist nachstehend anhand von Ausführungsbeispielen unter Bezugnahme auf die beiliegenden Zeichnungen beschrieben. Es zeigen:
- Fig. 1: eine erfindungsgemäße zweiteilige Vorrichtung zum Ernten von Pilzen (Gondel) in einer Seitenansicht;
- Fig. 2: die in Fig. 1 gezeigte Vorrichtung in einem entkoppelten Zustand;
- Fig. 3: die Vorrichtung gemäß Fig. 1 in einer Seitenansicht;
- Fig. 4: die Vorrichtung gemäß Fig. 1 in einer weiteren Seitenansicht;
- Fig. 5: eine erfindungsgemäße Vorrichtung mit einem Traggestell zur Aufnahme einer Person in einer Seitenansicht;
- Fig. 6: die Vorrichtung gemäß Fig. 5 in einer weiteren Seitenansicht;
- Fig. 7: eine erfindungsgemäße Vorrichtung mit einer Traggestell zur Aufnahme einer Transportvorrichtung für Pilze in einer Seitenansicht;
- Fig. 8: ein Detail aus der in Fig. 7 gezeigten Vorrichtung;
- Fig. 9: eine erfindungsgemäße Transportvorrichtung auf Rollen (Pilzwagen) in einer Seitenansicht;
- Fig. 10: der Pilzwagen gemäß Fig. 9 in einer weiteren Seitenansicht;
- Fig. 11: der Pilzwagen gemäß Fig. 9 und 10 in einer Draufsicht;
- Fig. 12: ein erfindungsgemäßes Behältnis in Form eines Blechs (Pilzblech) in einer Draufsicht;
- Fig. 13: ein alternatives Ausführungsbeispiel eines Pilzblechs; und
- Fig. 14: ein Detail der Transportvorrichtung mit schrägem Blech.

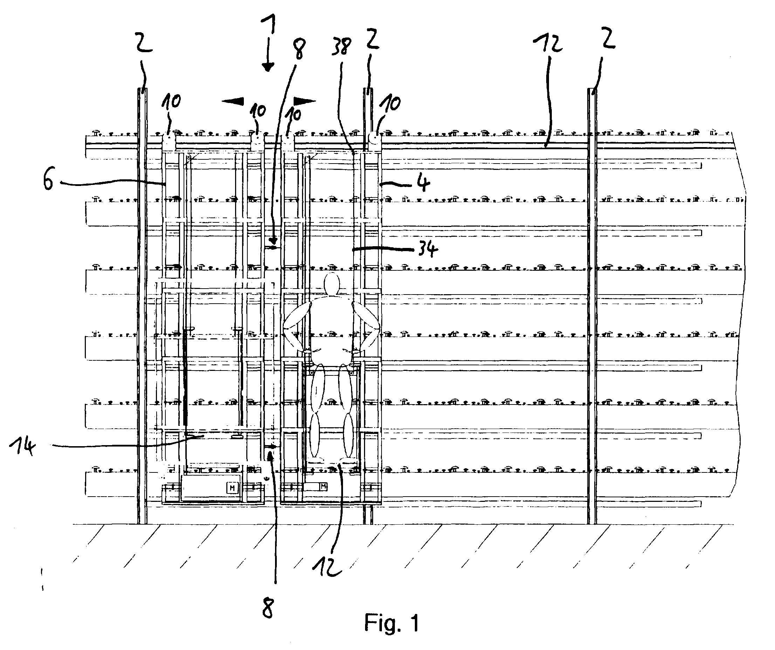

Die in Fig. 1 dargestellte Vorrichtung 1 dient zum Ernten von Pilzen und wird auch als Gondel bezeichnet. Sie könnte auch für die Ernte anderer Pflanzen oder dergleichen verwendet werden. Die Pilze sind in einem klimatisierten Raum in mit Substrat gefüllten Kästen auf sogenannten Stellagen in mehreren Ebenen übereinander untergebracht. Die Stellagen weisen mehrere vertikale Ständer 2 auf. Die erfindungsgemäßen Vorrichtungen könnten auch an anderen Gestellen eingesetzt werden.

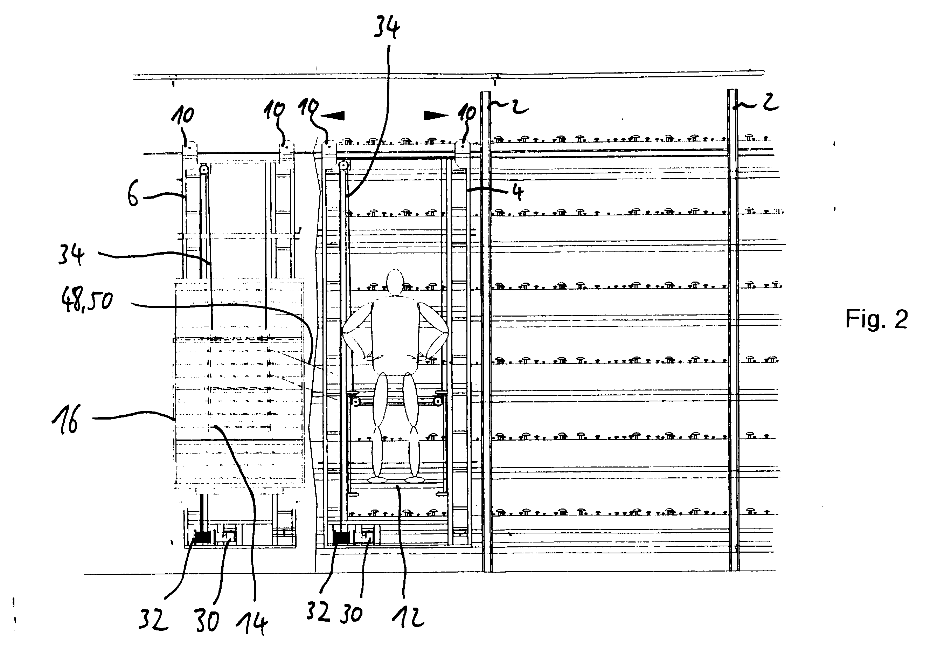

Die Gondel 1 weist ein erstes Rahmengestell 4 und ein zweites, mit Hilfe von einer Kopplungseinrichtung 8 lösbar befestigbares zweites Rahmengestell 6 auf. Die Kopplungseinrichtung 8 weist jeweils zwei an dem Rahmengestell 6 befestigte Flachstahlelemente und ein an dem Rahmengestell 4 befestigtes Flachstahlelement auf. Die Flachstahlelemente sind jeweils mit einer Bohrung versehen, durch die ein Bolzen hindurchgesteckt werden kann, um die beiden Rahmengestelle 4, 6 miteinander zu verbinden, wie dies in Fig. 1 dargestellt ist. In Fig. 2 sind die beiden Rahmengestelle 4, 6 entkoppelt.

Beide Rahmengestelle 4, 6 sind mit jeweils zwei im oberen Bereich montierten Laufrollen 10 relativ zu den Stellagen horizontal verfahrbar entlang einer an den Ständer 2 horizontal angeordneten Laufschiene 12. Sowohl an dem Rahmengestell 4 als auch an dem Rahmengestell 6 ist jeweils eine Hubvorrichtung befestigt, die ein Traggestell 12 zur Aufnahme einer Person bzw. ein Traggestell 14 zur Aufnahme einer Transportvorrichtung 16 (vgl. Fig. 2) ausgebildet ist.

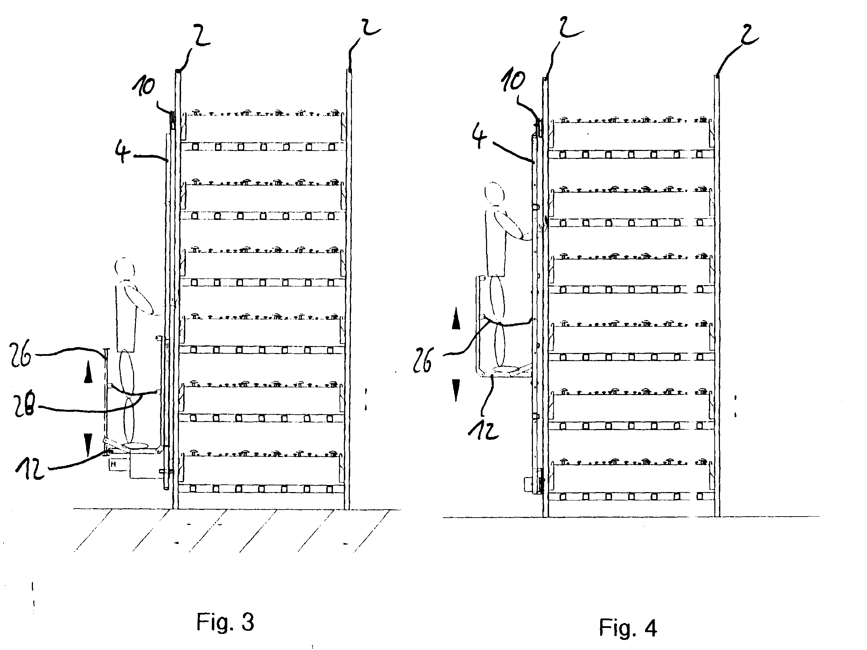

Das in den Fig. 3 bis 6 dargestellte Traggestell 12 ist vertikal relativ zu dem Rahmen 4 verfahrbar und mittels einer im wesentlichen durch Führungsschienen 16 gebildeten Linearführung geführt, welche Führungsflächen aus einem verschleißfesten Kunststoff aufweisen. Das Traggestell 12 weist zwei vertikale Streben 18, eine obere Querstrebe 20 sowie zwei an der Querstrebe 20 drehbar gelagerte Umlenkrollen 22 auf, um die in noch zu beschreibender Weise ein Seil gelegt ist. Eine Plattform 24 verbindet unten die Streben 18 und weist eine Standfläche für die Person auf. Ein Geländer 26, welches zusätzlich mit einer Kette 28 (vgl. Fig. 3 und 4) gesichert ist, sorgt für ausreichende Sicherheit für die Person. Wie aus den Fig. 3 und 4 ersichtlich ist, ist das Traggestell 12 zusammen mit der Person vertikal auf und ab verfahrbar durch Betätigung der Hubvorrichtung.

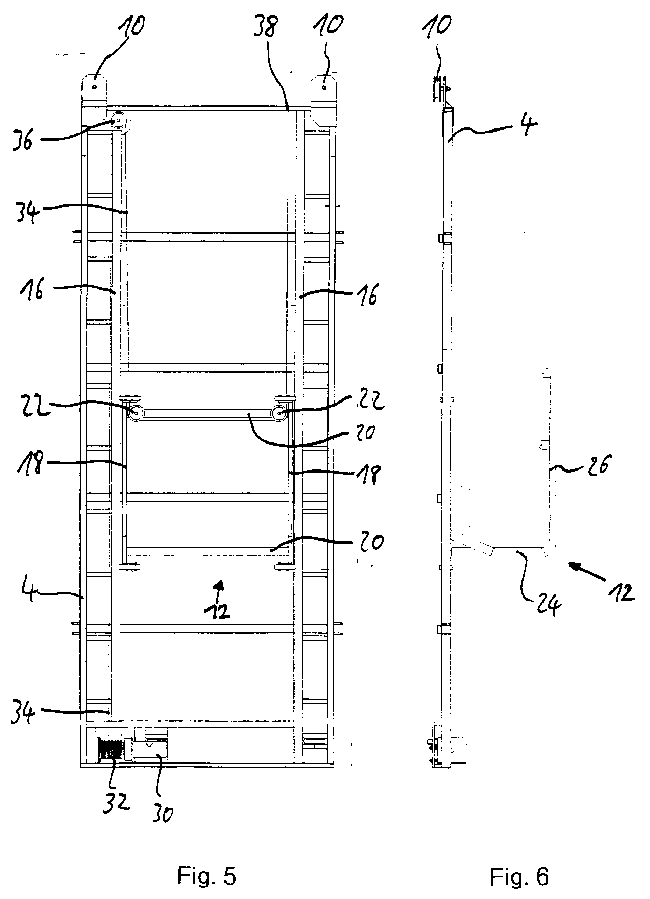

Die Hubvorrichtung weist, wie insbesondere aus Fig. 5 ersichtlich ist, einen im unteren Bereich des Rahmengestells 4 montierten Elektromotor 30 sowie eine mit der Antriebswelle des Elektromotors 30 gekoppelte Seiltrommel 32 auf, um die ein Zugseil 34 gewickelt ist. Zwischen dem Elektromotor 30 und der Seilrommel 32 ist ein selbsthemmendes Schneckengetriebe geschaltet. Das Zugseil 34 wird durch eine an dem Rahmengestell 4 im oberen Bereich angeordnete Umlenkrolle 36 und durch die Umlenkrollen 22 des Traggestells 18 umgelenkt und ist mit einem Endabschnitt dauerhaft und sicher an dem Rahmengestell 4 befestigt, vgl. Bezugszeichen 38. Aufgrund dieser Zugseilführung trägt das Zugseil 34 das Traggestell 18.

Ist der Elektromotor 30 ausgeschaltet, wird das Traggestell 12 zusammen mit einer Person im wesentlichen aufgrund der Selbsthemmung des Schneckengetriebes sicher gehalten. Bei Betätigung des Antriebsmotors 30 wird das Seil 34 auf die Seiltrommel 32 aufgewickelt, so daß die Seillänge sich verkürzt und das Traggestell 12 aufwärts bewegt wird. Bei Umkehrung der Drehrichtung des Antriebsmotors 30 wird das Zugseil 34 von der Seiltrommel 32 abgewickelt, die Seillänge wird größer, und das Traggestell 12 wird abwärts bewegt. Auf diese Weise läßt sich das Traggestell 12 stufenlos in eine beliebige Stellung zusammen mit der Person verfahren, so daß diese alle Ebenen der Stellagen bequem manuell zum Ernten der Pilze erreichen kann, vgl. Fig. 3 und 4. Die Hubvorrichtung könnte in nicht dargestellter Weise alternativ als eine hydraulische Hubvorrichtung mit Hydraulikzylinder und einem in diesen geführten Kolben ausgebildet sein.

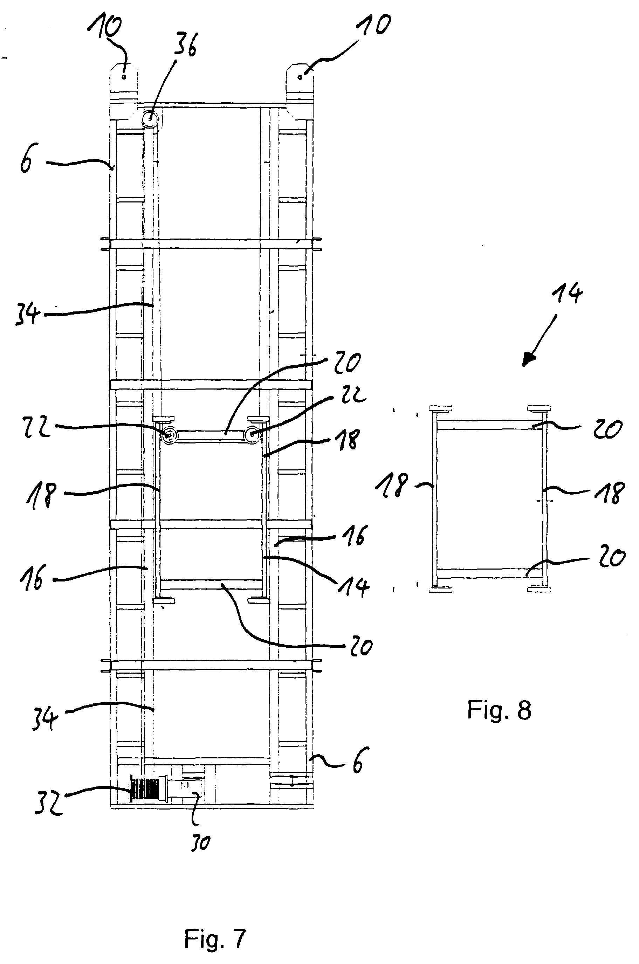

Die an dem separaten Rahmengestell 6 angeordnete Hubvorrichtung zum Anheben bzw. Absenken des Traggestells 14 für die Transportvorrichtung 16 ist prinzipiell ähnlich ausgebildet wie die zuvor beschriebene Hubvorrichtung des Rahmengestells 4, so daß zur Vermeidung von Wiederholungen auf die obigen Beschreibungen Bezug genommen wird. Einzelheiten sind insbesondere in Fig. 7 dargestellt; gleiche Teile sind mit gleichen Bezugszeichen versehen. Durch Betätigung des Antriebsmotors 30 wird das Traggestell 14, in welches die Transportvorrichtung 16 eingehängt ist, auf- bzw. abwärtsbewegt, so daß die Transportvorrichtung 16 in jede beliebigen Stellung verfahren werden kann und optimal ausgerichtet werden kann zu einer Person, die die Transportvorrichtung mit Pilzen befüllt. Das Traggestell 14 weist ebenfalls zwei Querstreben 20 und vertikale Streben 18 auf. Von dem Traggestell 14 stehen zwei im wesentlichen vertikal verlaufende Tragarme zum Aufnehmen der Transportvorrichtung 16 ab.

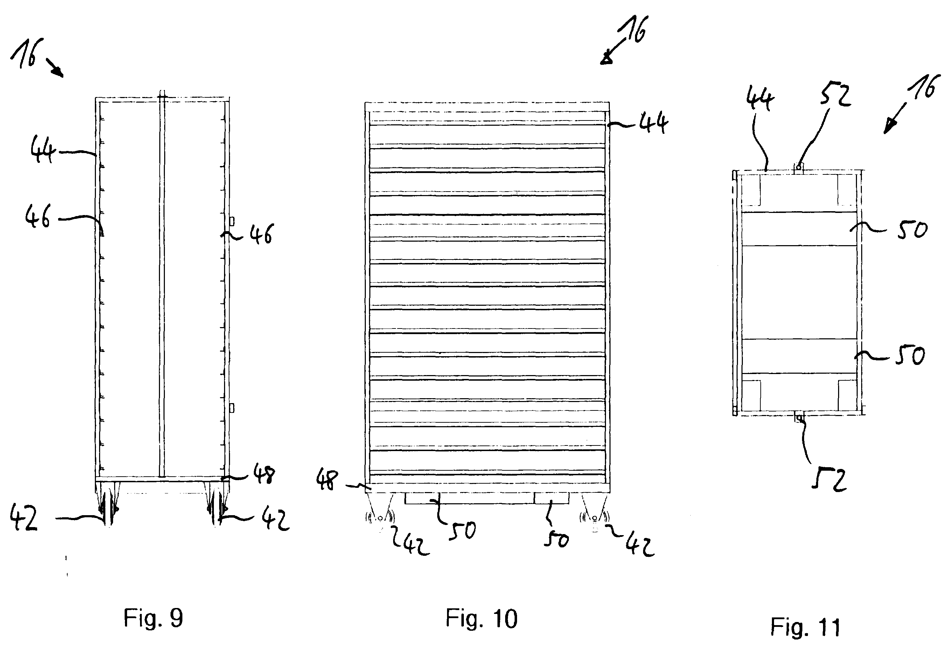

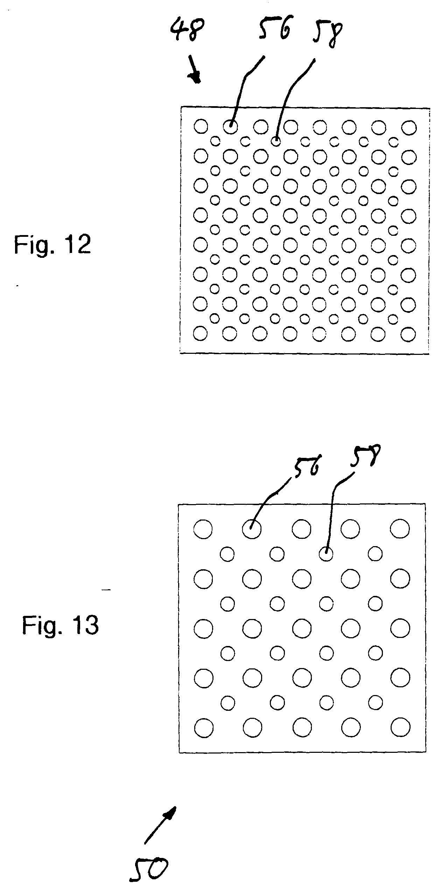

Die Fig. 9 bis 11 veranschaulichen im Detail eine erfindungsgemäße Transportvorrichtung 16, die als Pflück-Wagen mit Laufrollen 42 zum Verfahren ausgebildet ist. Die Transportvorrichtung 16 weist ein Rahmengestell 44 auf, welches eine im wesentlichen quaderförmige Form aufweist und aus mehreren einzelnen Profilen aus Metall zusammengesetzt ist. Eine Vielzahl von an dem Rahmengestell 44 befestigten Tragschienen 46 sind in mehreren Ebenen jeweils paarweise gegenüberliegend so angeordnet, daß Behältnisse in die Transportvorrichtung einschiebbar sind und auf den Tragschienen 46 abgelegt werden können. Vorzugsweise werden Behältnisse in Form von (Loch-) Blechen 48, 50, wie sie in den Fig. 12 und 13 im einzelnen dargestellt sind, eingelegt. Die Tragschienen 46 sind als Winkelbleche ausgebildet und an das Rahmengestell 44 angeschweißt oder angeschraubt. Unterhalb einer Bodenplatte 48 sind Gabelstaplerösen 50 zum Einführen der Zinken eines Gabelstaplers und zur Erhöhung der Festigkeit angeschraubt. An den zwei kürzeren Seiten der Transportvorrichtung 16 sind zwei vertikale Haltestangen 52 angeordnet.

Die Transportvorrichtung weist vorzugsweise maschinenlesbare Markierungen auf, die Informationen über die Transportvorrichtung und/oder die Pilze und/oder die Behältnisse enthalten. Die Markierungen können als Schilder oder sog. bar-code ausgebildet sein, so daß sie entweder vom Menschen oder einem maschinellen bar-code-Leser gelesen werden können und die Information einer Datenverarbeitungsanlage zugeführt werden kann.

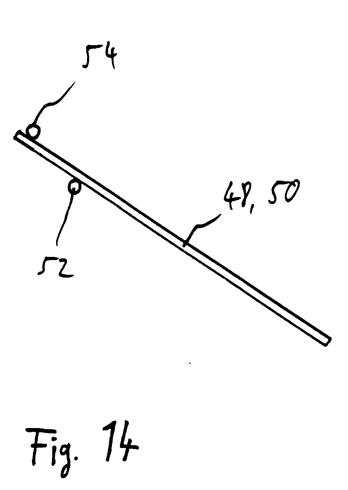

Wie aus Fig. 2 ersichtlich ist, sind die in den Fig. 12 und 13 separat dargestellten Bleche 48, 50 als Behältnisse zur Aufnahmen von Pilzen in einer gegenüber einer horizontalen Ebene geneigten Anordnung an der Transportvorrichtung 16 befestigbar. Die hierzu erforderlichen Befestigungsmittel sind als in Fig. 14 im einzelnen dargestellte Vorsprünge, genauer gesagt als Bolzen ausgebildet, die ebenfalls paarweise gegenüberliegend an dem Rahmengestell 44 vorgesehen sind. Die Bolzen 52, 54 sind an einer Seite in unterschiedlichen Höhen und beabstandet zueinander so angeordnet, daß ein Blech 48, 50 mit einer Unterseite auf einem Bolzen 52, 54 aufliegt und von dem anderen Bolzen 52, 54, der in Kontakt mit einer Oberseite des Blechs 48, 50 steht, gehalten wird. Aufgrund der Reibung des Blechs 48, 50 an dem Bolzen 52, 54 wird dieses sicher gehalten. Zur Erhöhung der Reibung können die Bolzen 52, 54 gegebenenfalls mit einer reibungserhöhenden Beschichtung, etwa aus Kunststoff versehen sein.

Ein erfindungsgemäßes Behältnis in Form eines Blechs aus Metall, vorzugsweise Aluminium oder aus einem Kunststoff ist in den Fig. 12 und 13 dargestellt. Jedes Blech 48, 50 weist eine quadratische Form auf und ist mit mehreren kreisförmigen Durchgangsbohrungen 56 mit einem ersten Durchmesser und Durchgangsbohrungen 58 mit einem den gegenüber geringeren Durchmesser versehen. Die Durchgangsbohrungen 56 sind in jeweils parallelen Reihen zueinander angeordnet, und die Durchgangsbohrungen 58 sind in ebenfalls beabstandeten Reihen angeordnet, die jeweils zwischen den Reihen der Durchgangsbohrungen 56 liegen. Auf diese Weise kann eine hohe Anzahl von Pilzen auf den Blechen 48, 50 abgelegt werden, wobei der Kopf eines Pilzes mit seiner Unterseite auf einer Oberseite des Blechs 48, 50 aufliegt und der Stengel durch die Durchgangsbohrung 56 bzw. 58 hindurchragt.

Die Bleche sind vorzugsweise wie folgt auf der Transportvorrichtung angeordnet: Auf den oberen etwa drei Tragschienen 46 werden Bleche mit kleinen Bohrungs-Durchmessern zur Aufnahme kleiner, feiner Pilze, auf den darunter liegenden, mittleren Tragschienen 46 Bleche mit etwas größeren, mittleren Bohrungs-Durchmessern für mittelgroße Pilze und auf den unteren Tragschienen 46 Bleche mit größeren Bohrungs-Durchmessern für Pilze geringerer Qualität und/oder größeren Pilzen plaziert.

In Fig. 13 sind die Durchgangsbohrungen 56, 58 in unterschiedlichen Abständen zueinander angeordnet und die Durchmesser sind abweichend gegenüber den Durchmessern des Blechs 48. Alternativ können erfindungsgemäß auch Bleche 48 eingesetzt werden, die Bohrungen mit nur einem einheitlichen Durchmesser aufweisen, oder an einer Transportvorrichtung Bleche mit unterschiedlichen Bohrungsdurchmessern.

## Patentansprüche

1. Transportvorrichtung für Pilze,
mit einem Rahmengestell (44) und mehreren jeweils paarweise gegenüberliegenden, an dem Rahmengestell (44) montierten Tragschienen (46), auf die Behältnisse (48, 50) zur Aufnahme der Pilze auflegbar sind.

2. Transportvorrichtung nach Anspruch 1,
dadurch gekennzeichnet, daß an dem Rahmengestell (44) Befestigungsmittel vorgesehen- sind, mit deren Hilfe ein Behältnis in einer gegenüber einer horizontalen Ebene geneigten Ebene befestigbar ist.

3. Transportvorrichtung nach Anspruch 2,
dadurch gekennzeichnet, daß die Befestigungsmittel zur geneigten Anordnung der Behältnisse (48, 50) jeweils zwei paarweise gegenüberliegende, an dem Rahmengestell (44) abstehende Vorsprünge aufweisen.

4. Transportvorrichtung nach Anspruch 3,
dadurch gekennzeichnet, daß die Vorsprünge als Schrauben oder Bolzen (52, 54) ausgebildet sind, wobei an einer Seite des Rahmengestells (44) angeordnete Schrauben oder Bolzen (52, 54) versetzt und in unterschiedlichen Höhen relativ zueinander angeordnet sind.

5. Transportvorrichtung nach einem der Ansprüche 1 bis 4,
dadurch gekennzeichnet, daß die Behältnisse (48, 50) im wesentlichen ebene, Durchgangsbohrungen (56, 58) aufweisende Bleche (48, 50) sind.

6. Transportvorrichtung nach Anspruch 5,
dadurch gekennzeichnet, daß die Bleche (48, 50) in der geneigten Anordnung mit einer Unterseite auf einem Vorsprung aufliegen und von dem anderen Vorsprung in der geneigten Anordnung durch Kontakt mit einer Oberseite des Blechs (48, 50) gehalten werden.

7. Transportvorrichtung nach mindestens einem der vorstehenden Ansprüche 1 bis 6,
gekennzeichent durch mehrere, im unteren Bereich des Rahmengestells (44) befestigte Laufrollen (42).

8. Transportvorrichtung nach mindestens einem der vorstehenden Ansprüche 1 bis 7,
dadurch gekennzeichnet, daß jeweils zwei Behältnisse (48, 50) in einer Ebene nebeneinander auf die Tragschienen (46) auflegbar sind und mehrere Behältnisse (48, 50) beabstandet übereinander liegend transportiert und gelagert werden.

9. Transportvorrichtung nach mindestens einem der vorstehenden Ansprüche 1 bis 8,
dadurch gekennzeichnet, daß sie vorzugsweise maschinenlesbare Markierungen aufweist, die Informationen über die Transportvorrichtung und/oder die Pilze und/oder die Behältnisse enthalten.

10. Behältnis zur Aufnahme von Pilzen oder dergleichen,
welches mehrere Durchgangsbohrungen (56, 58) aufweist,
dadurch gekennzeichnet, daß die Durchgangsbohrungen (56, 58) unterschiedliche Größen aufweisen.

11. Behältnis nach Anspruch 10,
dadurch gekennzeichnet, daß die Durchgangsbohrungen (56, 58) im wesentlichen kreisförmig sind und unterschiedliche oder gleiche Durchmesser aufweisen.

12. Behältnis nach Anspruch 10 oder 11,
dadurch gekennzeichnet, daß die Durchgangsbohrungen (56, 58) beabstandet zueinander in mehreren Reihen angeordnet sind.

13. Behältnis nach Anspruch 12,
dadurch gekennzeichnet, daß Durchgangsbohrungen (58) mit geringerem Durchmesser jeweils zwischen Reihen von Durchgangsbohrungen (56) größeren Durchmessers angeordnet sind.

14. Behältnis nach einem der vorstehenden Ansprüche,
dadurch gekennzeichnet, daß sie als quadratische Aluminiumbleche ausgebildet sind.

15. Vorrichtung zum Ernten von Pilzen oder dgl., die in mehreren übereinander angeordneten Ebenen auf Stellagen untergebracht sind und manuell von den Stellagen entnommen werden können,
mit einem relativ zu den Stellagen horizontal verfahrbaren Rahmengestell (4, 6) und einer an dem Rahmengestell (4, 6) befestigten Hubvorrichtung, die ein vertikal auf- und abbewegbares Traggestell (12, 14) zur Aufnahme einer die Pilze erntenden Person und/oder zur Aufnahme von Pilzen aufweist,
dadurch gekennzeichnet, daß die Hubvorrichtung eine motorische oder hydraulische Antriebseinrichtung zum automatischen Auf- und Abbewegen des Traggestells (12, 14) aufweist.

16. Vorrichtung nach Anspruch 15,
gekennzeichnet durch eine weitere an dem Rahmengestell befestigte, eine motorische oder hydraulische Antriebseinrichtung aufweisende Hubvorrichtung zum Aufnehmen und automatischen Auf- und Abbewegen einer Transportvorrichtung (16) für Pilze.

17. Vorrichtung nach Anspruch 15 und 16,
dadurch gekennzeichnet, daß beide Hubvorrichtungen an einem gemeinsamen Rahmengestell angeordnet sind.

18. Vorrichtung nach Anspruch 15 und 16,
dadurch gekennzeichnet, daß jede Hubvorrichtung an einem separaten Rahmengestell (4, 6) angeordnet ist, wobei vorzugsweise die beiden Rahmengestelle (4, 6) mittels einer Kopplungseinrichtung (8) lösbar aneinander befestigbar sind, so daß die beiden Rahmengestelle (4, 6) im gekoppelten Zustand gemeinsam verfahrbar und im entkoppelten Zustand individuell verfahrbar sind.

19. Vorrichtung nach einem der vorstehenden Ansprüche,
dadurch gekennzeichnet, daß die erste und/oder weitere Hubvorrichtung einen Antriebsmotor (30), eine mit diesem gekoppelte Seiltrommel (32) und ein auf die Seiltrommel gewickeltes Zugseil (34) aufweist, welches das Traggestell (12, 14) trägt.

20. Vorrichtung nach Anspruch 19,
dadurch gekennzeichnet, daß das Zugseil (34) um eine erste, an dem Rahmengestell (4, 6) befestigte Umlenkrolle (36) und mindestens eine an dem Traggestell (12, 14) befestigte weitere Umlenkrolle (22) umgelenkt und mit einem von der Seiltrommel (32) beabstandeten Endabschnitt (38) an dem Rahmengestell (4, 6) befestigt ist.

21. Vorrichtung nach Anspruch 19 und 20,
dadurch gekennzeichnet, daß der Antriebsmotor (30) und die Seiltrommel (32) im unteren Bereich des Rahmengestells (4, 6) angeordnet sind.

22. Vorrichtung nach einem der Ansprüche 19 bis 21,
dadurch gekennzeichnet, daß das Traggestell (12, 14) mittels an dem Rahmengestell (4, 6) ausgebildeten Linearführungen (16) gleitend geführt ist.

23. Vorrichtung nach einem der vorstehenden Ansprüche,
dadurch gekennzeichnet, daß Laufrollen (10) zum horizontalen Verfahren an dem Rahmengestell (4, 6) befestigt sind, die in an den Stellagen befestigten Laufschienen (12) einhängbar sind.

24. Vorrichtung nach mindestens einem der vorstehenden Ansprüche,
dadurch gekennzeichnet, daß das Traggestell (14) der weiteren Hubvorrichtung für die Transportvorrichtung (16) für Pilze mindestens einen Tragarm zum Aufnehmen der Transportvorrichtung (16) aufweist.

25. Vorrichtung nach mindestens einem der vorstehenden Ansprüche,
dadurch gekennzeichnet, daß die Antriebseinrichtung der ersten und weiteren Hubvorrichtung durch einen an dem Rahmengestell (4, 6) befestigten Schalter ein- bzw. ausschaltbar ist.
